# EUROPEAN PATENT APPLICATION

(11) **EP 4 746 534 A1**
(43) Date of publication of application: **20.05.2026**
(21) Application number: 24838707.8
(22) Date of filing: 05.07.2024
(51) Int. Cl.: H04W 52/02

(54) **TRANSMISSION PROCESSING METHODS, APPARATUS, TERMINAL AND NETWORK SIDE DEVICE**

(30) Priority: 10.07.2023 CN 202310840178
(71) Applicant: Vivo Mobile Communication Co., Ltd., Dongguan, Guangdong 523863 (CN)
(72) Inventor: WANG, Lihui, Dongguan, Guangdong 523863 (CN); PAN, Xueming, Dongguan, Guangdong 523863 (CN)
(74) Representative: Shieldmark
(86) International application number: PCT/CN2024/103831
(87) International publication number: WO 2025/011454

(57) **Abstract**

This application discloses a transmission processing method and apparatus, a terminal, and a network-side device, and belongs to the field of communication technologies. The transmission processing method in an embodiment of this application includes: A terminal performs a first operation in a case that the terminal is configured with wake up signal WUS monitoring, where the first operation includes at least one of the following: determining a first monitoring behavior of a WUS based on configuration information of discontinuous reception DRX in a case that the terminal is not configured with downlink control information with cyclic redundancy check scrambled by a power saving radio network temporary identifier DCP; or determining at least one of a second monitoring behavior of a WUS based on detection results of DCP and a third monitoring behavior of the DCP based on detection results of the WUS in a case that the terminal is configured with the DCP.

## Description

### CROSS-REFERENCE TO RELATED APPLICATIONS

This application claims priority to Chinese Patent Application No. 202310840178.6, filed in China on July 10, 2023, which is incorporated herein by reference in its entirety.

### TECHNICAL FIELD

This application belongs to the field of communication technologies, and specifically, relates to a transmission processing method and apparatus, a terminal, and a network-side device.

### BACKGROUND

With development of communication technologies, a low power signal (low power signal) is received at a mobile communication terminal by introducing a low power wake up receiver (low power wake up receiver, LP-WUR), so that a primary communication module is in a disabled state or an ultra-deep sleep state, thereby effectively reducing power consumption of the terminal. The low power signal may also be referred to as a low power wake up signal (low power wake up signal, LP-WUS) or a wake up signal. However, currently, there are energy-saving mechanisms such as discontinuous reception (Discontinuous Reception, DRX) and downlink control information with cyclic redundancy check scrambled by a power saving radio network temporary identifier (DCI with CRC Scrambled by PS-RNTI, DCP). Therefore, after the WUS is introduced, how to combine the WUS with a related energy-saving mechanism for use becomes a problem that needs to be urgently resolved.

### SUMMARY

Embodiments of this application provide a transmission processing method and apparatus, a terminal, and a network-side device, which can resolve, after a WUS is introduced, a problem of how to combine the WUS with a related energy-saving mechanism for use.

According to a first aspect, a transmission processing method is provided, including:
performing, by a terminal, a first operation in a case that the terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

According to a second aspect, a transmission processing method is provided, including:
performing, by a network-side device, a second operation, where the second operation includes any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, where the configuration information of the DRX is used to determine a first monitoring behavior of the WUS;
configuring DCP and configuration information of a WUS for the terminal, where monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, where detection results of the WUS are used to determine that the terminal performs a target behavior.

According to a third aspect, a transmission processing apparatus is provided, including:
a first execution module, configured to perform a first operation in a case that a terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

According to a fourth aspect, a transmission processing apparatus is provided, including:
a second execution module, configured to perform a second operation, where the second operation includes any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, where the configuration information of the DRX is used to determine a first monitoring behavior of the WUS;
configuring DCP and configuration information of a WUS for the terminal, where monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, where detection results of the WUS are used to determine that the terminal performs a target behavior.

According to a fifth aspect, a terminal is provided. The terminal includes a processor and a memory. The memory stores a program or instructions capable of running on the processor, and the program or the instructions are executed by the processor to implement the steps of the method according to the first aspect.

According to a sixth aspect, a terminal is provided, including a processor and a communication interface. The communication interface is configured to perform a first operation in a case that the terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

According to a seventh aspect, a network-side device is provided. The network-side device includes a processor and a memory. The memory stores a program or instructions capable of running on the processor, and the program or the instructions are executed by the processor to implement the steps of the method according to the second aspect.

According to an eighth aspect, a network-side device is provided, including a processor and a communication interface. The communication interface is configured to perform a second operation, where the second operation includes any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, where the configuration information of the DRX is used to determine a first monitoring behavior of the WUS;
configuring DCP and configuration information of a WUS for the terminal, where monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, where detection results of the WUS are used to determine that the terminal performs a target behavior.

According to a ninth aspect, a readable storage medium is provided. The readable storage medium stores a program or instructions, and the program or the instructions are executed by a processor to implement the steps of the method according to the first aspect, or to implement the steps of the method according to the second aspect.

According to a tenth aspect, a wireless communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface. The communication interface is coupled to the processor, and the processor is configured to run a program or instructions to implement the method according to the first aspect, or to implement the method according to the second aspect.

According to a twelfth aspect, a computer program/program product is provided. The computer program/program product is stored in a storage medium, and the program/program product is executed by at least one processor to implement the method according to the first aspect, or to implement the method according to the second aspect.

In the embodiments of this application, a terminal performs a first operation in a case that the terminal is configured with wake up signal WUS monitoring, where the first operation includes at least one of the following: determining a first monitoring behavior of a WUS based on configuration information of discontinuous reception DRX in a case that the terminal is not configured with downlink control information with cyclic redundancy check scrambled by a power saving radio network temporary identifier DCP; or determining at least one of a second monitoring behavior of a WUS based on detection results of DCP and a third monitoring behavior of the DCP based on detection results of the WUS in a case that the terminal is configured with the DCP. In this way, the monitoring behaviors of the WUS and the DCP are determined when the WUS is used with the energy-saving mechanism of the DRX and the DCP, thereby implementing joint operation of the WUS and another power saving mechanism, to reduce power consumption of the terminal.

### BRIEF DESCRIPTION OF DRAWINGS

FIG. 1 is a block diagram of a wireless communication system to which an embodiment of this application is applicable;
FIG. 2 is a principle diagram of waking up a terminal;
FIG. 3 is a schematic flowchart of a transmission processing method according to an embodiment of this application;
FIG. 4 to FIG. 9 are example diagrams of WUS monitoring in a transmission processing method according to an embodiment of this application;
FIG. 10 is a schematic flowchart of another transmission processing method according to an embodiment of this application;
FIG. 11 is a schematic diagram of a structure of a transmission processing apparatus according to an embodiment of this application;
FIG. 12 is a schematic diagram of a structure of another transmission processing apparatus according to an embodiment of this application;
FIG. 13 is a schematic diagram of a structure of a communication device according to an embodiment of this application;
FIG. 14 is a schematic diagram of a structure of a terminal according to an embodiment of this application; and
FIG. 15 is a schematic diagram of a structure of a network-side device according to an embodiment of this application.

### DESCRIPTION OF EMBODIMENTS

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

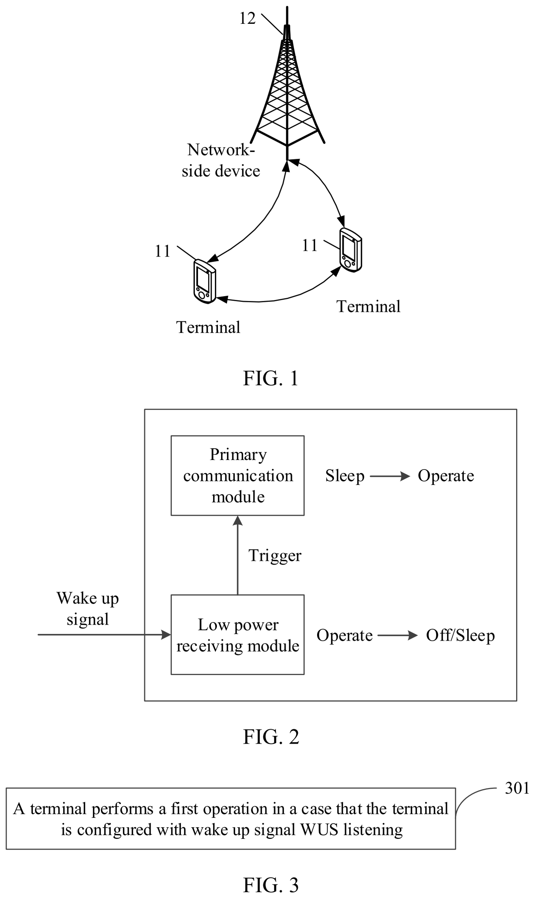

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that a same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only the core network device in the NR system is used as an example for description, and a specific type of the core network device is not limited.

For ease of understanding, the following describes some content related to the embodiments of this application.

### I. Low power receiver.

The low power receiver may be referred to as an LP-WUR or an almost zero power wake up receiver (almost zero power wake up receiver, AZP-WUR). A basic operating principle of the LP-WUR is that a receive end includes a first module and a second module, the first module is a primary communication module and is configured to send/receive mobile communication data, and the second module is a low power receiving module (also referred to as a low power wake up receiving module) and is configured to receive the foregoing low power wake up signal, which is specifically shown in FIG. 2. When a terminal is in an idle state or an inactive state, in an energy-saving state or an ultra-deep sleep state, the terminal enables the low power receiving module to monitor an LP-WUS, and disables the primary communication module. When downlink data arrives, a network-side device sends a wake up signal to the terminal. After monitoring the wake up signal by using the low power receiving module, the terminal triggers the primary communication module after a series of determining, to change from a disabled state to an enabled state. In this case, the low power receiving module enters a disabled state from a working state. The low power wake up receiving module may receive a low power wake up signal when being started.

### II. Low power wake up signal (low power wake up signal, LP-WUS)

To reduce receiving activities of a terminal in a standby state, so that a radio frequency (Radio Frequency, RF) module and a baseband modem (MODEM) module of a receiving module of the terminal are truly disabled, and communication receiving power consumption is greatly reduced, an almost "zero" power receiver may be introduced into a receiving module of the terminal. The almost "zero" power receiver does not require complex signal detection (such as amplification, filtering, and quantization) by the RF module and signal processing by the MODEM, and can only depend on passive matched filtering and low power signal processing.

On a base station side, a wake up signal is sent on-demand (on-demand), so that the almost "zero" power receiver can be activated to learn of an activation advertisement, thereby triggering a series of procedures inside the terminal, for example, enabling a radio frequency transceiver module and a baseband processing module.

Generally, the wake up signal is a relatively simple on-off keying (on-off keying, OOK) signal. In this way, the radio can learn of a wake up advertisement by using a process such as simple energy detection and subsequent possible sequence detection and identification.

Receiving of the low power wake up signal may be applied to a terminal in a radio resource control (Radio Resource Control, RRC) idle (RRC_idle)/inactive (inactive) state, or may be applied to a terminal in an RRC_connected (RRC_connected) state, thereby implementing energy saving of the terminal.

In an embodiment, the wake up signal mentioned in this application is the wake up signal received and monitored by the low power receiver, namely, the low power wake up signal.

### III. Connected discontinuous reception (Connected Discontinuous Reception, C-DRX).

The C-DRX may also be understood as or replaced with DRX, so that user equipment (User Equipment, UE) periodically enters a sleep state, and does not monitor a physical downlink control channel (Physical downlink control channel, PDCCH). During monitoring, the user equipment wakes up (Wake Up) from the sleep state, thereby achieving an objective of saving power. The foregoing "sleep" means that a terminal does not monitor PDCCHs that are scrambled by a cell radio network temporary identifier (cell Radio Network Temporary Identifier, C-RNTI), a modulation and coding scheme (Modulation and coding scheme, MCS) cell radio network temporary identifier (MCS-C-RNTI), a control information RNTI (control information RNTI, CI-RNTI), a configured scheduling RNTI (Configured Scheduling RNTI, CS-RNTI), an interruption RNTI (Interruption RNT, INT-RNTI), a slot format indication RNTI (Slot Format Indication RNTI, SFI-RNTI), a semi-persistent channel state information RNTI (Semi-Persistent Channel State Information RNTI, SP-CSI-RNTI), a transmit power control physical uplink control channel RNTI (Transmit Power Control Physical Uplink Control Channel RNTI, TPC-PUCCH-RNTI), a TPC physical uplink shared channel RNTI (TPC Physical Uplink Shared Channel RNTI, TPC-PUSCH-RNTI), a TPC sounding reference signal RNTI (TPC Sounding Reference Signal RNTI, TPC-SRS-RNTI), an availability indicator RNTI (Availability Indicator RNTI, AI-RNTI), a sidelink RNTI (Sidelink RNTI, SL-RNTI), a sidelink configured scheduling RNTI (Sidelink Configured Scheduling RNTI, SLCS-RNTI), and an SL Semi-Persistent Scheduling V-RNTI. On the contrary, "wake up" refers to time at which the UE is "awake", and is used to monitor the foregoing PDCCH and the like. This awake time is collectively referred to as active time (Active Time), and includes the following several cases:
DRX on-duration timer (drx-onDurationTimer): In this case, the UE is monitoring whether a PDCCH exists.

DRX inactivity timer (drx-InactivityTimer): In this case, the UE monitors a PDCCH and is receiving downlink data.

DRX downlink retransmission timer (drx-RetransmissionTimerDL) or DRX uplink retransmission timer drx-RetransmissionTimerUL: In this case, the UE is waiting for retransmission.

Random access contention resolution timer (ra-ContentionResolutionTimer) or message B response window (msgB-ResponseWindow): In this case, the UE is waiting to receive Msg2 or Msg4.

Sending a scheduling request on a PUCCH (SR is sent on PUCCH): After the UE sends the scheduling request (Scheduling Request, SR), the UE is waiting for an uplink grant (UL grant).

After the UE performing a contention-free random access receives a random access response (Random access response, RAR): In this case, the UE waits to receive DCI scrambled by the C-RNTI, to indicate uplink resource scheduling.

### IV. DCP.

A DCI format (format) of the DCP is DCI format 2_6, and is scrambled by a power saving radio network temporary identifier (Power Saving Radio Network Temporary Identifier, PS-RNTI) and sent in common search space (Common Search Space), for example, in a type3-PDCCH common search space set (Type3-PDCCH CSS set). A reason for sending the DCP in the common search space is that the DCP may be shared by a plurality of UEs. To be specific, a network-side device may use one piece of DCP to control the plurality of UEs whether to start a DRX on-duration timer (drx-onDurationTimer) in a next long DRX cycle. Optionally, a long DRX cycle may be configured with DCP, and a short DRX cycle may not be configured with DCP.

Optionally, each long DRX cycle (Long DRX Cycle) has a corresponding DCP monitoring occasion (DCP monitoring occasion, DCP MO). The UE monitors the DCI format 2_6 in the DCP MO. Once detecting DCI in an MO, the UE reads content of the DCI, reports a wakeup indication (Wake-up indication) to a media access control (Media Access Control, MAC) layer. A MAC entity (entity) correspondingly starts a drx-onDurationTimer for a next DRX Cycle (that is, the UE wakes up at on duration), or enables the UE to remain asleep (sleep). If both the short DRX cycle (Short DRX Cycle) and the long DRX cycle (Long DRX Cycle) are configured, a WUS is only for the long DRX Cycle, and the short DRX Cycle is still in an original process. The terminal does not monitor the DCP during DRX active time.

Once no DCI is detected in the DCP MO, the UE does not report any information. In this case, a higher-layer parameter ps-WakeUp configured by a network takes effect.

A configuration of 1 indicates that: If detecting no DCI, the UE wakes up in a next DRX Cycle.

A configuration of 0 or a default value indicates that: If detecting no DCI, the UE remains asleep in a next DRX Cycle.

For a DRX Cycle, start time of monitoring the DCP MO by the UE is indicated by a parameter ps-Offset in a unit of slot (slot). To be specific, the UE starts to perform DCP monitoring from ps-Offset slots before start time of the DRX Cycle and continues monitoring until a minimum value is reached from the start time of the DRX Cycle. In other words, there is the minimum value for a gap, namely, a minimum gap (Min Gap) between an end of DCP monitoring and a start of the DRX Cycle. A magnitude of the Min Gap is a capability of the UE, and the UE reports the minimum value for the gap, namely, the minimum gap to the network-side device during capability reporting. This Gap is time mainly used to process the DCP.

In addition, when the UE cannot or does not need to monitor the DCP MO, for example, the DCP MO overlaps a synchronization signal block (Synchronization Signal and PBCH block, SSB), or due to a measurement gap (Measurement gap) and the like, drx-onDurationTimer is to be started in the next DRX Cycle.

The following describes in detail a transmission processing method in embodiments of this application with reference to accompanying drawings by using some embodiments and application scenarios thereof.

Referring to FIG. 3, an embodiment of this application provides a transmission processing method. As shown in FIG. 3, the transmission processing method includes:

Step 301: A terminal performs a first operation in a case that the terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

In this embodiment of this application, in a case that the terminal is not configured with the DCP and is configured with the configuration information of the DRX, the WUS needs to be used together with a power saving mechanism associated with the DRX. In a case that the terminal is configured with configuration information of the WUS and is also configured with the DCP, the WUS needs to be used together with a power saving mechanism associated with the DCP, or the WUS needs to be used together with a power saving mechanism associated with the DRX and the DCP.

Optionally, the determining a first monitoring behavior of a WUS based on configuration information of DRX may be understood as determining time for monitoring the WUS based on the configuration information of the DRX, for example, monitoring the WUS during DRX active time.

Optionally, the determining a second monitoring behavior of a WUS based on detection results of DCP may be understood as: determining a monitoring behavior of the WUS based on a case whether the DCP is monitored or whether the DCP is monitored and obtained, and determining the monitoring behavior of the WUS based on indication information carried in the monitored and obtained DCP.

In this embodiment of this application, a terminal performs a first operation in a case that the terminal is configured with wake up signal WUS monitoring, where the first operation includes at least one of the following: determining a first monitoring behavior of a WUS based on configuration information of discontinuous reception DRX in a case that the terminal is not configured with downlink control information with cyclic redundancy check scrambled by a power saving radio network temporary identifier DCP; or determining at least one of a second monitoring behavior of a WUS based on detection results of DCP and a third monitoring behavior of the DCP based on detection results of the WUS in a case that the terminal is configured with the DCP. In this way, the monitoring behaviors of the WUS and the DCP are determined when the WUS is used with the energy-saving mechanism of the DRX and the DCP, thereby implementing joint operation of the WUS and another power saving mechanism, to reduce power consumption of the terminal.

It should be noted that the DRX mentioned in this embodiment of this application may be understood as C-DRX.

Optionally, in some embodiments, the first monitoring behavior meets at least one of the following:
monitoring the WUS during DRX active time; and
monitoring the WUS outside DRX active time or during DRX inactive time (DRX Inactive Time).

Optionally, "outside DRX active time or during DRX inactive time" may include at least one of the following:
a non-running period of drx-onDurationTimer;
a running period of a DRX inactivity timer (drx-InactivityTimer);
a non-running period of a downlink retransmission timer (drx-RetransmissionTimerDL) or an uplink retransmission timer (drx-RetransmissionTimerUL); and
not in Long DRX Cycle.

Optionally, in some embodiments, the first monitoring behavior is determined based on at least one of the following: a protocol agreement and a configuration or an indication by a network-side device via target signaling.

In an implementation of this application, the foregoing target signaling may include at least one of RRC signaling, layer 1 signaling, or layer 2 signaling.

Optionally, content included in the foregoing target signaling may be set based on an actual requirement. For example, in some embodiments, the target signaling includes any one of the following:
first indication information, where the first indication information is used to indicate the first monitoring behavior; and
second indication information, where the second indication information is used to configure at least one of a WUS cycle, a measurement window in the WUS cycle, and a WUS monitoring occasion in the measurement window.

In this embodiment of this application, that the target signaling includes the first indication information may be understood as that the network-side device explicitly indicates the first monitoring behavior. When the target signaling includes only the second indication information, it may be understood that the network-side device implicitly indicates the first monitoring behavior. In this case, the foregoing first monitoring behavior may be determined based on a location of a WUS MO.

Optionally, in a case that the network-side device is not configured with the WUS cycle, the WUS cycle is consistent with a DRX cycle by default.

Optionally, in some embodiments, the WUS MO may be understood as an activated WUS MO if additional signaling activation is required for WUS monitoring, for example, WUS monitoring is activated by using RRC signaling, layer 1 signaling, or layer 2 signaling.

Optionally, in some embodiments, in a case that the terminal is configured with at least two DRX groups (DRX group), the at least two DRX groups meet any one of the following:
a first monitoring behavior corresponding to each DRX group is separately determined;
first monitoring behaviors corresponding to all DRX groups are the same;
the terminal considers or expects that the first monitoring behaviors corresponding to all the DRX groups are the same; and
the terminal does not expect that the first monitoring behaviors corresponding to all the DRX groups are different.

For a case in which the first monitoring behavior corresponding to each DRX group is separately determined, for the WUS MO, each DRX group is independently configured, indicated, activated, deactivated, or monitored.

Optionally, when the WUS is shared between the at least two DRX groups, in the at least two DRX groups, the first monitoring behaviors corresponding to all the DRX groups are the same; or the terminal considers or expects that the first monitoring behaviors corresponding to all the DRX groups are the same; or the terminal does not expect that the first monitoring behaviors corresponding to all the DRX groups are different. For example, in the at least two DRX groups, the terminal monitors the WUS when both DRX groups are at DRX active time or when both DRX groups are at the DRX non-Active Time; or the terminal monitors the WUS at the DRX Active Time and the DRX non-Active Time.

Optionally, in some embodiments, the second monitoring behavior meets any one of the following:
in a case that it is detected that at least one piece of target downlink control information DCI associated with a DRX cycle indicates that the terminal does not start a DRX on-duration timer, the second monitoring behavior includes monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior includes not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior includes monitoring the WUS or activating WUS monitoring.

In this embodiment of this application, DCP monitoring precedes WUS monitoring. In this case, at least one of whether to monitor the WUS and how to monitor the WUS is determined based on DCP detection results.

Optionally, the foregoing target DCI may be understood as DCI in a DCI format 2_6, namely, DCP. It should be understood that the target DCI carries a wake-up indication, and when the wake-up indication is "0", it means that the target DCI indicates that drx-onDurationTimer does not start. In this case, the terminal monitors the WUS or activates WUS monitoring.

Optionally, that the foregoing second monitoring behavior includes monitoring the WUS may be understood as that the second monitoring behavior includes starting WUS monitoring or resuming WUS monitoring. For example, in some embodiments, the second monitoring behavior specifically includes any one of the following cases:
Case 1: The terminal monitors an LP-WUS only within a first time period, and the first time period is a time period from an end of a monitoring occasion of last one piece of target DCI to a start of drx_onDurationTimer. If the WUS is detected in the first time period, drx-onDurationTimer for this DRX Cycle starts. If the WUS is not detected in the first time period, drx-onDurationTimer for the DRX Cycle does not start.
Case 2: The terminal starts or resumes WUS monitoring or activates WUS monitoring until a next DCP MO.
Case 3: The terminal starts or resumes WUS monitoring or activates WUS monitoring until the WUS is detected.

Optionally, when it is detected that a wake-up indication carried in one piece of target DCI associated with the DRX cycle is "1", it means that the target DCI indicates that the terminal starts the DRX on-duration timer. In this case, the terminal starts or resumes WUS monitoring, or activates WUS monitoring. In this embodiment of this application, the terminal monitors the WUS only within a second time period, and the second time period is a time period from a symbol/slot immediately following a symbol/slot, in which the foregoing target DCI indicating that a wake-up indication of the UE is "1" is detected, to a start of drx_onDurationTimer. If the LP-WUS is detected in the second time period, drx-onDurationTimer for this DRX Cycle starts. If the LP-WUS is not detected in the second time period, drx-onDurationTimer for the DRX Cycle does not start.

Optionally, in a case that a start condition of drx-onDurationTimer is met, the terminal may determine that the DRX on-duration timer for the DRX cycle starts. In this case, the terminal does not monitor the WUS or WUS monitoring is deactivated. For the start condition of drx-onDurationTimer, reference may be made to a related technology. Details are not described herein. For example, in some embodiments, in a case that it is detected that one piece of target DCI associated with a DRX cycle indicates that the terminal starts the DRX on-duration timer, it may be determined that the DRX on-duration timer for the DRX cycle starts.

Optionally, in some embodiments, the WUS may be used to supplement DCP monitoring, that is, the terminal needs to monitor the WUS when not monitoring the DCP due to some factors.

Optionally, in some embodiments, in the case that no target DCI is detected in all DCP monitoring occasions associated with a DRX cycle or it is determined that no DCP is monitored in a DCP monitoring occasion associated with a DRX cycle, the method further includes:

The terminal determines that no DCP is monitored in the DCP monitoring occasion associated with the DRX cycle in a case that a first condition is met, where
the first condition includes at least one of the following:
the DCP monitoring occasion is within DRX active time;
the DCP monitoring occasion is within bandwidth part BWP switching interrupt time or a measurement gap period; and
during running of a random access response time window, a media access control MAC entity monitors, on a special cell (Special Cell, SpCell), a physical downlink control channel PDCCH of a random access response identified by a cell radio network temporary identifier c-RNTI.

Optionally, in some embodiments, the third monitoring behavior meets at least one of the following:
in a case that the WUS is detected in a target monitoring occasion, the third monitoring behavior includes any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, where
the target monitoring occasion is a WUS monitoring occasion in a DRX cycle before a DCP monitoring occasion.

In this embodiment of this application, WUS monitoring precedes DCP monitoring. At least one of whether to monitor the DCP and how to monitor the DCP is determined based on WUS detection results.

Optionally, the WUS may indicate the UE whether to monitor the DCP. In a case that DCP monitoring is indicated, the terminal monitors the DCP. In this case, if the WUS monitoring occasion exists after the DCP is monitored, a monitoring behavior (namely, the first monitoring behavior) of the WUS in a subsequent WUS monitoring occasion may be determined based on a monitoring result of the DCP. If the WUS monitoring occasion does not exist after the DCP is monitored, a behavior of the terminal is consistent with that of DCP monitoring in version 16 (R16).

Optionally, if the WUS indicates not monitoring the DCP, a behavior of the terminal and a wake-up indication (Wake-up indication) in detected DCP are 1, that is, a DRX on-duration timer for a next long DRX cycle (drx-onDurationTimer for the next long DRX cycle) is enabled.

Optionally, if the third monitoring behavior is not to monitor the DCP, a behavior of the terminal and a wake-up indication in detected DCP indicate 1, that is, drx-onDurationTimer for the next long DRX cycle is enabled.

Optionally, if the third monitoring behavior is to monitor the DCP, in this case, if the WUS monitoring occasion exists after the DCP is monitored, a monitoring behavior (namely, the first monitoring behavior) of the WUS in a subsequent WUS monitoring occasion may be determined based on a monitoring result of the DCP. If the WUS monitoring occasion does not exist after the DCP is monitored, a behavior of the terminal is consistent with that of DCP monitoring in version 16.

Optionally, in some embodiments, the method further includes:

The terminal performs a target behavior in a case that the terminal detects the WUS, where the target behavior includes at least one of the following:
a first behavior: at least one of determining a status of a primary receiver based on an indication of the WUS and monitoring a target PDCCH;
a second behavior: monitoring a PDCCH;
a third behavior: starting and running a first timer, and monitoring a PDCCH during running of the first timer; and
a fourth behavior: stop monitoring the WUS or continuing monitoring the WUS.

Optionally, the status of the primary receiver may be understood as one of a wake-up (Wake-up) state, a deep sleep and light sleep state, and a micro sleep (micro sleep) state that last for X consecutive units, where X is greater than or equal to 1, and may be configured by a higher layer or indicated by the WUS, and a time unit includes millisecond, slot, or symbol.

Optionally, if the WUS indicates "wake up", the terminal monitors the PDCCH. If the WUS does not indicate "wake up", the terminal is not required to monitor the PDCCH or the terminal does not monitor the PDCCH.

Optionally, the method further includes:

The terminal starts and runs a second timer in a case that the PDCCH is detected during running of the first timer; and
the terminal restarts the second timer in a case that the PDCCH is detected during running of the second timer.

Optionally, the method further includes:

The terminal stops monitoring the PDCCH, and resumes monitoring the WUS in a case that a second condition is met, where
the second condition includes at least one of the following:
the first timer expires;
the network-side device indicates that the first timer stops running or terminates running;
the second timer expires; and
the network-side device indicates that the second timer stops running or terminates running.

In this embodiment of this application, the network-side device may indicate, by using at least one of the following signaling, that the first timer stops running or terminates running:
newly defined signaling;
a DRX command media access control control element (Command MAC CE); and
a Long DRX Command MAC CE.

Similarly, the network-side device may indicate, by using at least one of the following signaling, that the second timer stops running or terminates running:
newly defined signaling;
a DRX Command MAC CE; and
a Long DRX Command MAC CE.

Optionally, in some embodiments, the foregoing first timer may be equal to the second timer. In other words, the foregoing first timer may be replaced with the second timer, or the second timer may be replaced with the first timer.

Optionally, in some embodiments, at least one of the first timer and the second timer includes at least one of the following:
a newly defined timer;
a DRX on-duration timer; and
a DRX inactivity timer.

Optionally, in some embodiments, the stopping monitoring the WUS includes:
stopping monitoring a WUS monitoring occasion in a current WUS cycle, and continuing monitoring a WUS monitoring occasion in a next WUS cycle.

Optionally, in some embodiments, the target PDCCH includes at least one of the following:
a PDCCH scheduled by using a DCI format of a protocol agreement, a higher layer configuration, or an indication of the WUS;
a PDCCH scrambled by an RNTI of a protocol agreement, a higher layer configuration, or an indication of the WUS; and
a PDCCH on a search space or a search space set of a protocol agreement, a higher layer configuration, or an indication of the WUS.

Optionally, in some embodiments, a target behavior corresponding to the WUS detected during the DRX active time is different from a target behavior corresponding to the WUS detected outside the DRX active time or during the DRX inactive time.

For example, the WUS is detected during the DRX Active Time, and the terminal performs at least the first behavior. The WUS is detected during the DRX non-Active Time, and the terminal performs at least one of the second behavior or the third behavior.

Optionally, in some embodiments, a function and an operating mechanism of the WUS are the same as those of R16 DCP. The terminal does not expect to simultaneously configure functions of using the LP-WUS and the DCP. Alternatively, the terminal does not expect to simultaneously configure, in a same DRX group, functions of the LP-WUS and the DCP. In other words, a network ensures that using of only the LP-WUS is configured, or using of only the DCP is configured.

For better understanding of this application, the following provides detailed descriptions by using some specific instances.

In some embodiments, it is assumed that the terminal monitors the WUS only during the DRX non-Active Time based on a protocol specification or a signaling display configuration or indication. In this case, it may also be understood that the WUS MO configured or activated takes effect or is valid only in during DRX non-Active Time.

Optionally, a WUS configuration or monitoring occasion is as follows:
WUS cycle (Periodicity/Cycle): 10;
WUS monitoring window (Monitoring Window): 5; and
Window start offset (Window Start Offset): 2, where
the WUS monitoring occasion within a window (WUS monitoring occasion (MO) within the window) may be continuous, discrete, periodic, or aperiodic.

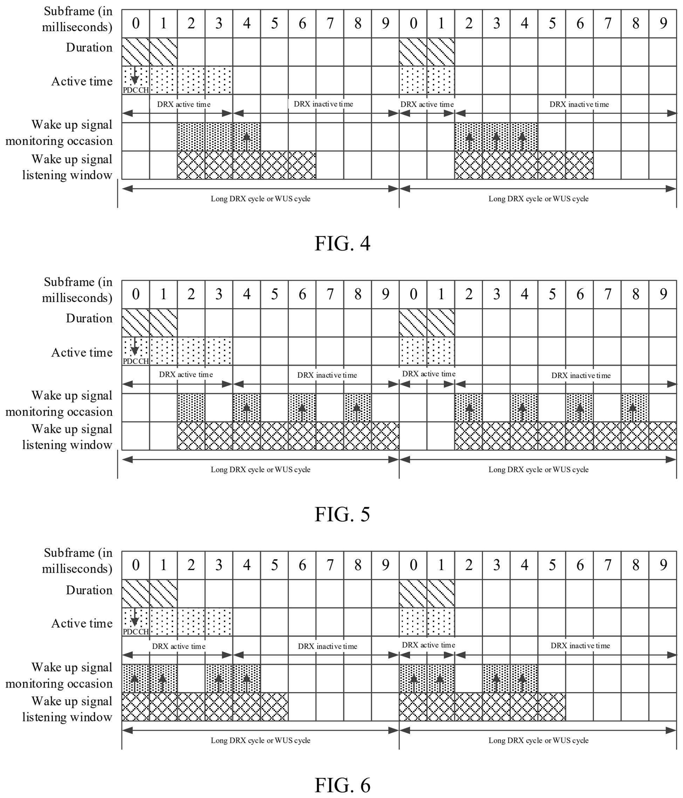

As shown in FIG. 4, assuming that the terminal detects the PDCCH at a 0th millisecond of a first long DRX cycle, the WUS is monitored at a 4th millisecond of the first long DRX cycle and a 2nd millisecond to a 4th millisecond of a second long DRX cycle; or the WUS MO takes effect, and it is considered that the WUS MO is valid.

It should be noted that in this embodiment of this application, the not monitoring the WUS may include at least one of the following understandings:

The network-side device assumes or considers that the terminal does not need to monitor the WUS, or the terminal does not monitor the WUS.

The network-side device does not require the terminal to monitor the WUS.

Depending on an implementation of the terminal, the terminal may monitor the WUS or may not monitor the WUS.

Optionally, transmission of the WUS may be single transmission, or may be a plurality of times of transmission, for example, repeated transmission.

In some embodiments, the terminal monitors the WUS based on a time domain location of a WUS MO configured or indicated by signaling.

An example is as follows: Depending on the time domain location of the WUS MO, the terminal may monitor the WUS only in a non-running period of drx-onDurationTimer.

Optionally, a WUS configuration or monitoring occasion is as follows:
WUS cycle (Periodicity/Cycle): 10;
WUS monitoring window (Monitoring Window): 8; and
Window start offset (Window Start Offset): 2, where
the WUS monitoring occasion within the window may be continuous, discrete, periodic, or aperiodic.

As shown in FIG. 5, assuming that the terminal detects the PDCCH at a 0th millisecond of a first long DRX cycle, the WUS is monitored at a 4th millisecond, a 6th millisecond, and an 8th millisecond of the first long DRX cycle, and at a 2nd millisecond, a 4th millisecond, a 6th millisecond, and an 8th millisecond of a second long DRX cycle; or the WUS MO takes effect, and it is considered that the WUS MO is valid.

Another example is as follows: Depending on the time domain location of the WUS MO, the terminal may monitor the LP-WUS during running of drx-onDurationTimer, or may monitor the WUS in a non-running period of drx-onDurationTimer.

Optionally, a WUS configuration or monitoring occasion is as follows:
WUS cycle (Periodicity/Cycle): 10;
WUS monitoring window (Monitoring Window): 6; and
Window start offset (Window Start Offset): 0, where
the WUS monitoring occasion within the window may be continuous, discrete, periodic, or aperiodic.

As shown in FIG. 6, assuming that the terminal detects the PDCCH at a 0th millisecond of a first long DRX cycle, the WUS is monitored at the 0th millisecond, a 1st millisecond, a 3rd millisecond, and a 4th millisecond of the long DRX cycle; or the WUS MO takes effect, and it is considered that the WUS MO is valid.

Another example is as follows: Depending on the time domain location of the WUS MO, the terminal may continuously monitor the WUS.

Optionally, a WUS configuration or monitoring occasion is as follows:
WUS cycle (Periodicity/Cycle): 10;
WUS monitoring window (Monitoring Window): 8; and
Window start offset (Window Start Offset): 2, where
the WUS monitoring occasion within the window may be continuous, discrete, periodic, or aperiodic.

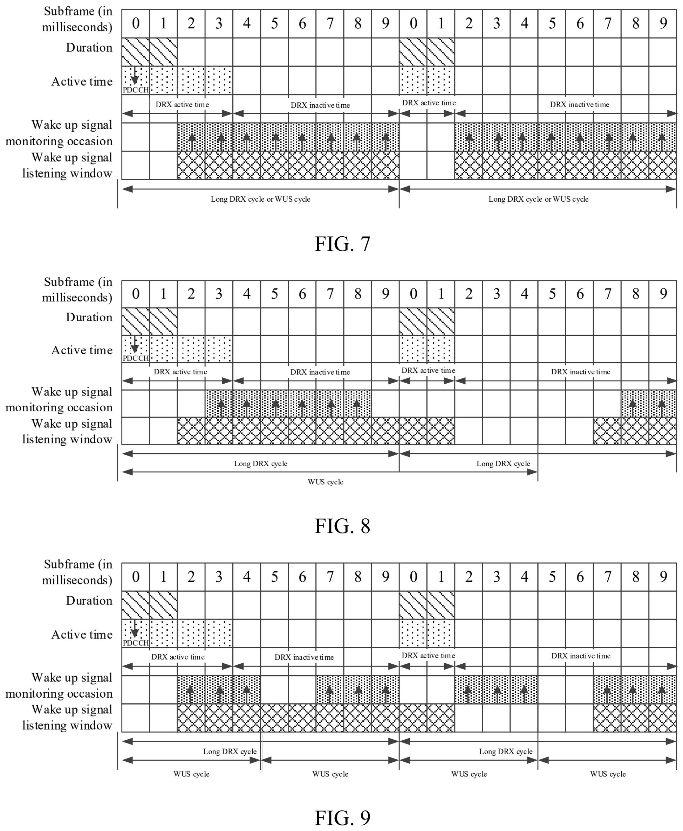

As shown in FIG. 7, assuming that the terminal detects the PDCCH at a 0th millisecond of a first long DRX cycle, the WUS is monitored at a 2nd millisecond to a 9th millisecond of the long DRX cycle; or the WUS MO takes effect, and it is considered that the WUS MO is valid.

Another example is as follows: The WUS cycle (or a WUS monitoring cycle) is greater than the DRX cycle.

Optionally, a WUS configuration or monitoring occasion is as follows:
WUS cycle (Periodicity/Cycle): 15;
WUS monitoring window (Monitoring Window): 10; and
Window start offset (Window Start Offset): 2, where
the WUS monitoring occasion within the window may be continuous, discrete, periodic, or aperiodic.

As shown in FIG. 8, assuming that the terminal detects the PDCCH at a 0th millisecond of a first long DRX cycle, the WUS is monitored at a 3rd millisecond to an 8th millisecond of the first long DRX cycle and at an 8th millisecond to a 9th millisecond of a second long DRX cycle; or the WUS MO takes effect, and it is considered that the WUS MO is valid.

Another example is as follows: The WUS cycle is less than the DRX cycle.

Optionally, a WUS configuration or monitoring occasion is as follows:
WUS cycle (Periodicity/Cycle): 5;
WUS monitoring window (Monitoring Window): 3; and
Window start offset (Window Start Offset): 2, where
the WUS monitoring occasion within the window may be continuous, discrete, periodic, or aperiodic.

As shown in FIG. 9, assuming that the terminal detects the PDCCH at a 0th millisecond of a first long DRX cycle, the WUS is monitored at a 2nd millisecond to a 4th millisecond and a 7th millisecond to a 9th millisecond of the long DRX cycle; or the WUS MO takes effect, and it is considered that the WUS MO is valid.

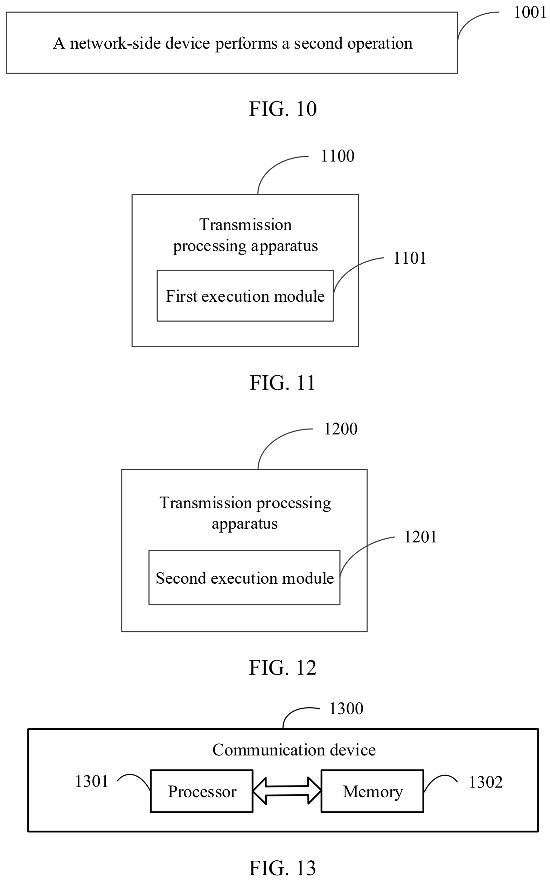

Referring to FIG. 10, an embodiment of this application further provides a transmission processing method. As shown in FIG. 10, the transmission processing method includes:

Step 1001: A network-side device performs a second operation, where the second operation includes any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, where the configuration information of the DRX is used to determine a first monitoring behavior of the WUS;
configuring DCP and configuration information of a WUS for the terminal, where monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, where detection results of the WUS are used to determine that the terminal performs a target behavior.

In this embodiment of this application, the foregoing PDCCH search space set switching may be understood as release 16 search space set group switching. The foregoing skipping monitoring configuration information of a PDCCH may include release 17 skipping of PDCCH monitoring.

Optionally, for a terminal side, UE that indicates to support a WUS should further indicate to support R17 PDCCH skipping functions (including at least one of pdcch-SkippingWithoutSSSG-r17 and pdcch-SkippingWithSSSG-r17), or R16 SSSG switching, or drx-Adaptation-r16 and drx-Adaptation-r17.

For a network side, when configuring a WUS, the network-side device should also configure at least one of DRX, DCP, R17 PDCCH skipping, and R16 SSSG switching.

Optionally, the first monitoring behavior meets at least one of the following:
monitoring the WUS during DRX active time; and
monitoring the WUS outside DRX active time or during DRX inactive time.

Optionally, the method further includes:
The network-side device sends target signaling to the terminal, where the target signaling is used to configure or indicate the first monitoring behavior.

Optionally, the target signaling includes at least one of the following:
first indication information, where the first indication information is used to indicate the first monitoring behavior; and
second indication information, where the second indication information is used to configure at least one of a WUS cycle, a measurement window in the WUS cycle, and a WUS monitoring occasion in the measurement window.

Optionally, the second monitoring behavior meets any one of the following:
in a case that it is detected that at least one piece of target downlink control information DCI associated with a DRX cycle indicates that the terminal does not start a DRX on-duration timer, the second monitoring behavior includes monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior includes not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior includes monitoring the WUS or activating WUS monitoring.

Optionally, the third monitoring behavior meets at least one of the following:
in a case that the WUS is detected in a target monitoring occasion, the third monitoring behavior includes any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, where
the target monitoring occasion is a WUS monitoring occasion in a DRX cycle before a DCP monitoring occasion.

The transmission processing method provided in the embodiments of this application may be performed by a transmission processing apparatus. In the embodiments of this application, the transmission processing apparatus provided in the embodiments of this application is described by using an example in which the transmission processing apparatus performs the transmission processing method.

Referring to FIG. 11, an embodiment of this application further provides a transmission processing apparatus. As shown in FIG. 11, the transmission processing apparatus 1100 includes:
a first execution module 1101, configured to perform a first operation in a case that a terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

Optionally, the first monitoring behavior meets at least one of the following:
monitoring the WUS during DRX active time; and
monitoring the WUS outside DRX active time or during DRX inactive time.

Optionally, the first monitoring behavior is determined based on at least one of the following: a protocol agreement and a configuration or an indication by a network-side device via target signaling.

Optionally, the target signaling includes at least one of the following:
first indication information, where the first indication information is used to indicate the first monitoring behavior; and
second indication information, where the second indication information is used to configure at least one of a WUS cycle, a measurement window in the WUS cycle, and a WUS monitoring occasion in the measurement window.

Optionally, in a case that the network-side device is not configured with the WUS cycle, the WUS cycle is consistent with a DRX cycle by default.

Optionally, in a case that the terminal is configured with at least two DRX groups, the at least two DRX groups meet any one of the following:
a first monitoring behavior corresponding to each DRX group is separately determined;
first monitoring behaviors corresponding to all DRX groups are the same;
the terminal considers or expects that the first monitoring behaviors corresponding to all the DRX groups are the same; and
the terminal does not expect that the first monitoring behaviors corresponding to all the DRX groups are different.

Optionally, the second monitoring behavior meets any one of the following:
in a case that it is detected that at least one piece of target downlink control information DCI associated with a DRX cycle indicates that the terminal does not start a DRX on-duration timer, the second monitoring behavior includes monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior includes not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior includes monitoring the WUS or activating WUS monitoring.

Optionally, in the case that no target DCI is detected in all DCP monitoring occasions associated with a DRX cycle or it is determined that no DCP is monitored in a DCP monitoring occasion associated with a DRX cycle, the transmission processing apparatus 1100 further includes:
a determining module, configured to determine that no DCP is monitored in the DCP monitoring occasion associated with the DRX cycle in a case that a first condition is met, where
the first condition includes at least one of the following:
   the DCP monitoring occasion is within DRX active time;
   the DCP monitoring occasion is within bandwidth part BWP switching interrupt time or a measurement gap period; and
   during running of a random access response time window, a media access control MAC entity monitors, on a special cell SpCell, a physical downlink control channel PDCCH of a random access response identified by a cell radio network temporary identifier c-RNTI.

Optionally, the third monitoring behavior meets at least one of the following:
in a case that the WUS is detected in a target monitoring occasion, the third monitoring behavior includes any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, where
the target monitoring occasion is a WUS monitoring occasion in a DRX cycle before a DCP monitoring occasion.

Optionally, the first execution module 1101 is further configured to perform a target behavior in a case that the terminal detects the WUS, where the target behavior includes at least one of the following:
at least one of determining a status of a primary receiver based on an indication of the WUS and monitoring a target PDCCH;
monitoring a PDCCH;
starting and running a first timer, and monitoring a PDCCH during running of the first timer; and
stopping monitoring the WUS or continuing monitoring the WUS.

Optionally, the first execution module 1101 is further configured to:
start and run a second timer in a case that the PDCCH is detected during running of the first timer; and
restart the second timer in a case that the PDCCH is detected during running of the second timer.

Optionally, the first execution module 1101 is further configured to stop monitoring the PDCCH, and resume monitoring the WUS in a case that a second condition is met, where
the second condition includes at least one of the following:
the first timer expires;
the network-side device indicates that the first timer stops running or terminates running;
the second timer expires; and
the network-side device indicates that the second timer stops running or terminates running.

Optionally, at least one of the first timer and the second timer includes at least one of the following:
a newly defined timer;
a DRX on-duration timer; and
a DRX inactivity timer.

Optionally, the stopping monitoring the WUS includes:
stopping monitoring a WUS monitoring occasion in a current WUS cycle, and continuing monitoring a WUS monitoring occasion in a next WUS cycle.

Optionally, the target PDCCH includes at least one of the following:
a PDCCH scheduled by using a DCI format of a protocol agreement, a higher layer configuration, or an indication of the WUS;
a PDCCH scrambled by an RNTI of a protocol agreement, a higher layer configuration, or an indication of the WUS; and
a PDCCH on a search space or a search space set of a protocol agreement, a higher layer configuration, or an indication of the WUS.

Optionally, a target behavior corresponding to the WUS detected during the DRX active time is different from a target behavior corresponding to the WUS detected outside the DRX active time or during the DRX inactive time.

Referring to FIG. 12, an embodiment of this application further provides a transmission processing apparatus. As shown in FIG. 12, the transmission processing apparatus 1200 includes:
a second execution module 1201, configured to perform a second operation, where the second operation includes any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, where the configuration information of the DRX is used to determine a first monitoring behavior of the WUS;
configuring DCP and configuration information of a WUS for the terminal, where monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, where detection results of the WUS are used to determine that the terminal performs a target behavior.

Optionally, the first monitoring behavior meets at least one of the following:
monitoring the WUS during DRX active time; and
monitoring the WUS outside DRX active time or during DRX inactive time.

Optionally, the method further includes:

The network-side device sends target signaling to the terminal, where the target signaling is used to configure or indicate the first monitoring behavior.

Optionally, the target signaling includes at least one of the following:
first indication information, where the first indication information is used to indicate the first monitoring behavior; and
second indication information, where the second indication information is used to configure at least one of a WUS cycle, a measurement window in the WUS cycle, and a WUS monitoring occasion in the measurement window.

Optionally, the second monitoring behavior meets any one of the following:
in a case that it is detected that at least one piece of target downlink control information DCI associated with a DRX cycle indicates that the terminal does not start a DRX on-duration timer, the second monitoring behavior includes monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior includes not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior includes monitoring the WUS or activating WUS monitoring.

Optionally, the third monitoring behavior meets at least one of the following:
in a case that the WUS is detected in a target monitoring occasion, the third monitoring behavior includes any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, where
the target monitoring occasion is a WUS monitoring occasion in a DRX cycle before a DCP monitoring occasion.

The transmission processing apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The transmission processing apparatus provided in this embodiment of this application can implement the processes implemented in the method embodiments of FIG. 3 to FIG. 10, and achieve same technical effects. To avoid repetition, details are not described herein again.

As shown in FIG. 13, an embodiment of this application further provides a communication device 1300, including a processor 1301 and a memory 1302. The memory 1302 stores a program or instructions capable of running on the processor 1301. The program or the instructions are executed by the processor 1301 to implement the steps in the foregoing embodiment of the transmission processing method, and same technical effects can be achieved. To avoid repetition, details are not described herein again.

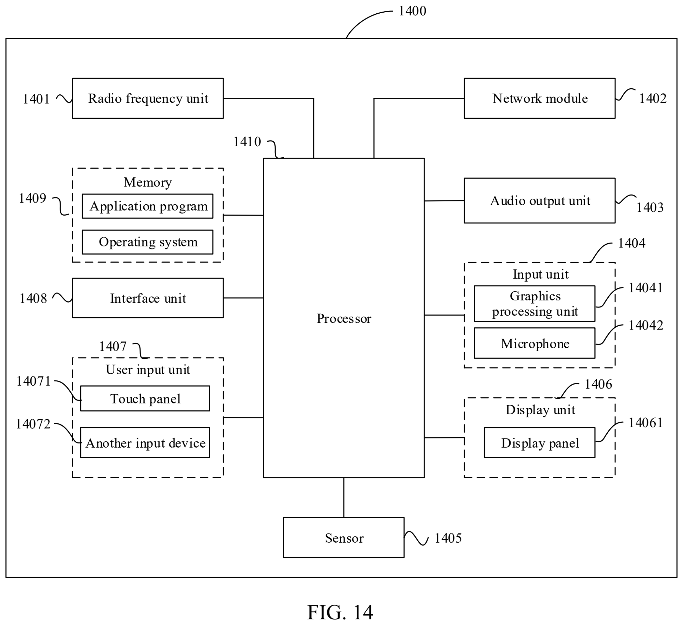

An embodiment of this application further provides a terminal, including a processor and a communication interface. The communication interface is coupled to the processor. The processor is configured to run a program or instructions to implement the steps in the method embodiment shown in FIG. 3. The terminal embodiment corresponds to the foregoing terminal-side method embodiment. Each implementation process and implementation of the foregoing method embodiment may be applied to the terminal embodiment, and same technical effects can be achieved. Specifically, FIG. 14 is a schematic diagram of a hardware structure of a terminal for implementing an embodiment of this application.

A terminal 1400 includes but is not limited to at least some components in a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) that supplies power to each component. The power supply may be logically connected to the processor 1410 by using a power management system, to implement functions such as charging management, discharging management, and power consumption management through the power management system. The structure of the terminal shown in FIG. 14 does not constitute a limitation on the terminal. The terminal may include more or fewer components than those shown in the figure, or combine some components, or have different component arrangements. Details are not described herein again.

It should be understood that in this embodiment of this application, the input unit 1404 may include a graphics processing unit (Graphics Processing Unit, GPU) 14041 and a microphone 14042. The graphics processing unit 14041 processes image data of a still picture or a video obtained by an image capture apparatus (for example, a camera) in a video capture mode or an image capture mode. The display unit 1406 may include a display panel 14061, and the display panel 14061 may be configured in a form of a liquid crystal display, an organic light-emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 1401 may transmit the downlink data to the processor 1410 for processing. In addition, the radio frequency unit 1401 may send uplink data to the network-side device. Generally, the radio frequency unit 1401 includes but is not limited to an antenna, an amplifier, a transceiver, a coupler, a low-noise amplifier, a duplexer, and the like.

The memory 1409 may be configured to store a software program or instructions and various types of data. The memory 1409 may mainly include a first storage area for storing a program or instructions and a second storage area for storing data. The first storage area may store an operating system, an application program or instructions required by at least one function (for example, a sound play function or an image play function), and the like. In addition, the memory 1409 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1409 in this embodiment of this application includes but is not limited to these memories and any other suitable type of memory.

The processor 1410 may include one or more processing units. Optionally, the processor 1410 integrates an application processor and a modem processor. The application processor mainly processes operations related to an operating system, a user interface, an application program, and the like. The modem processor mainly processes a wireless communication signal, such as a baseband processor. It may be understood that the modem processor may not be integrated into the processor 1410.

The radio frequency unit 1401 is configured to perform a first operation in a case that a terminal is configured with wake up signal WUS monitoring, where the first operation includes at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

It may be understood that for implementation processes of the implementations mentioned in this embodiment, reference may be made to related descriptions in the method embodiment, and same or corresponding technical effects are achieved. To avoid repetition, details are not described herein again.

An embodiment of this application further provides a network-side device, including a processor and a communication interface. The communication interface is coupled to the processor. The processor is configured to run a program or instructions to implement the steps in the method embodiment shown in FIG. 10. The network-side device embodiment corresponds to the foregoing method embodiment for the network-side device. Each implementation process and implementation of the foregoing method embodiment may be applied to the network-side device embodiment, and same technical effects can be achieved.

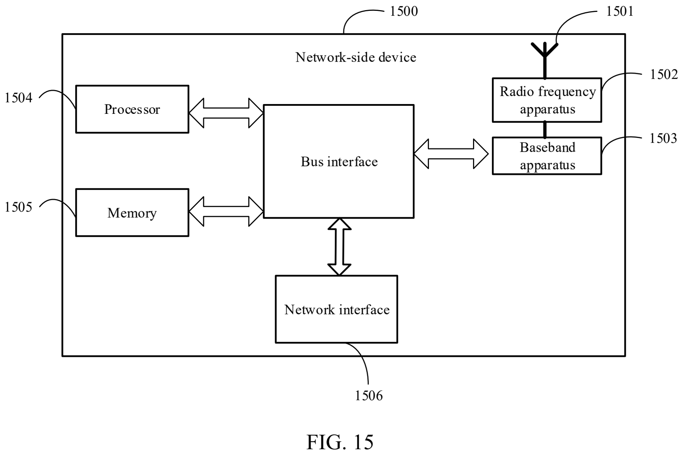

Specifically, an embodiment of this application further provides a network-side device. As shown in FIG. 15, the network-side device 1500 includes an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information by using the antenna 1501, and sends the received information to the baseband apparatus 1503 for processing. In a downlink direction, the baseband apparatus 1503 processes to-be-sent information, and sends processed information to the radio frequency apparatus 1502. After processing the received information, the radio frequency apparatus 1502 sends processed information by using the antenna 1501.

A method performed by the network-side device in the foregoing embodiment may be implemented in the baseband apparatus 1503. The baseband apparatus 1503 includes a baseband processor.

For example, the baseband apparatus 1503 may include at least one baseband board. A plurality of chips are disposed on the baseband board. As shown in FIG. 15, one of the chips is, for example, the baseband processor, and is connected to the memory 1505 by using a bus interface, to invoke a program in the memory 1505 to perform an operation of a network device shown in the foregoing method embodiment.

The network-side device may further include a network interface 1506, and the interface is, for example, a common public radio interface (Common Public Radio Interface, CPRI).

Specifically, the network-side device 1500 in this embodiment of this application further includes instructions or a program stored in the memory 1505 and capable of running on the processor 1504. The processor 1504 invokes the instructions or the program in the memory 1505 to perform the method performed by the modules shown in FIG. 12, and same technical effects are achieved. To avoid repetition, details are not described herein again.

An embodiment of this application further provides a readable storage medium. The readable storage medium stores a program or instructions. The program or the instructions are executed by a processor to implement the processes in the embodiments of the transmission processing method, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the embodiments of the transmission processing method, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the embodiments of the transmission processing method, and same technical effects can be achieved. To avoid repetition, details are not described herein again.

An embodiment of this application further provides a wireless communication system, including a terminal and a network-side device. The terminal may be configured to perform the steps of the foregoing transmission processing method at the terminal side, and the network-side device may be configured to perform the steps of the foregoing transmission processing method of the network-side device.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A transmission processing method, comprising:
performing, by a terminal, a first operation in a case that the terminal is configured with wake up signal WUS monitoring, wherein the first operation comprises at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

2. The method according to claim 1, wherein the first monitoring behavior meets at least one of the following:
monitoring the WUS during DRX active time; and
monitoring the WUS outside DRX active time or during DRX inactive time.

3. The method according to claim 2, wherein the first monitoring behavior is determined based on at least one of the following: a protocol agreement and a configuration or an indication by a network-side device via target signaling.

4. The method according to claim 3, wherein the target signaling comprises at least one of the following:
first indication information, wherein the first indication information is used to indicate the first monitoring behavior; and
second indication information, wherein the second indication information is used to configure at least one of a WUS cycle, a measurement window in the WUS cycle, and a WUS monitoring occasion in the measurement window.

5. The method according to claim 4, wherein in a case that the network-side device is not configured with the WUS cycle, the WUS cycle is consistent with a DRX cycle by default.

6. The method according to claim 1, wherein in a case that the terminal is configured with at least two DRX groups, the at least two DRX groups meet any one of the following:
a first monitoring behavior corresponding to each of the at least two DRX group is separately determined;
first monitoring behaviors corresponding to all of the at least two DRX groups are the same;
the terminal considers or expects that the first monitoring behaviors corresponding to all of the at least two the DRX groups are the same; and
the terminal does not expect that the first monitoring behaviors corresponding to all of the at least two the DRX groups are different.

7. The method according to claim 1, wherein the second monitoring behavior meets any one of the following:
in a case that it is detected that at least one piece of target downlink control information DCI associated with a DRX cycle indicates that the terminal does not start a DRX on-duration timer, the second monitoring behavior comprises monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior comprises not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior comprises monitoring the WUS or activating WUS monitoring.

8. The method according to claim 7, wherein in the case that no target DCI is detected in all DCP monitoring occasions associated with a DRX cycle or it is determined that no DCP is monitored in a DCP monitoring occasion associated with a DRX cycle, the method further comprises:
determining, by the terminal, that no DCP is monitored in the DCP monitoring occasion associated with the DRX cycle in a case that a first condition is met, wherein
the first condition comprises at least one of the following:
the DCP monitoring occasion is within DRX active time;
the DCP monitoring occasion is within bandwidth part BWP switching interrupt time or a measurement gap period; and
during running of a random access response time window, a media access control MAC entity monitors, on a special cell SpCell, a physical downlink control channel PDCCH of a random access response identified by a cell radio network temporary identifier c-RNTI.

9. The method according to claim 1, wherein the third monitoring behavior meets at least one of the following:
in a case that the WUS is detected in a target monitoring occasion, the third monitoring behavior comprises any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, wherein
the target monitoring occasion is a WUS monitoring occasion in a DRX cycle before a DCP monitoring occasion.

10. The method according to any one of claims 1 to 9, wherein the method further comprises:
performing, by the terminal, a target behavior in a case that the terminal detects the WUS, wherein the target behavior comprises at least one of the following:
at least one of determining a status of a primary receiver based on an indication of the WUS and monitoring a target PDCCH;
monitoring a PDCCH;
starting and running a first timer, and monitoring a PDCCH during running of the first timer; and
stopping monitoring the WUS or continuing monitoring the WUS.

11. The method according to claim 10, wherein the method further comprises:
starting and running, by the terminal, a second timer in a case that the PDCCH is detected during running of the first timer; and
restarting, by the terminal, the second timer in a case that the PDCCH is detected during running of the second timer.

12. The method according to claim 11, wherein the method further comprises:
stopping, by the terminal, monitoring the PDCCH, and resuming monitoring the WUS in a case that a second condition is met, wherein
the second condition comprises at least one of the following:
the first timer expires;
the network-side device indicates that the first timer stops running or terminates running;
the second timer expires; and
the network-side device indicates that the second timer stops running or terminates running.

13. The method according to claim 11, wherein at least one of the first timer and the second timer comprises at least one of the following:
a newly defined timer;
a DRX on-duration timer; and
a DRX inactivity timer.

14. The method according to claim 10, wherein the stopping monitoring the WUS comprises:
stopping monitoring a WUS monitoring occasion in a current WUS cycle, and continuing monitoring a WUS monitoring occasion in a next WUS cycle.

15. The method according to claim 10, wherein the target PDCCH comprises at least one of the following:
a PDCCH scheduled by using a DCI format of a protocol agreement, a higher layer configuration, or an indication of the WUS;
a PDCCH scrambled by an RNTI of a protocol agreement, a higher layer configuration, or an indication of the WUS; and
a PDCCH on a search space or a search space set of a protocol agreement, a higher layer configuration, or an indication of the WUS.

16. The method according to any one of claims 10 to 15, wherein a target behavior corresponding to the WUS detected during the DRX active time is different from a target behavior corresponding to the WUS detected outside the DRX active time or during the DRX inactive time.

17. A transmission processing method, comprising:
performing, by a network-side device, a second operation, wherein the second operation comprises any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, wherein the configuration information of the DRX is used to determine a first monitoring behavior of the WUS;
configuring DCP and configuration information of a WUS for the terminal, wherein monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, wherein detection results of the WUS are used to determine that the terminal performs a target behavior.

18. The method according to claim 17, wherein the first monitoring behavior meets at least one of the following:
monitoring the WUS during DRX active time; and
monitoring the WUS outside DRX active time or during DRX inactive time.

19. The method according to claim 18, wherein the method further comprises:
sending, by the network-side device, target signaling to the terminal, wherein the target signaling is used to configure or indicate the first monitoring behavior.

20. The method according to claim 19, wherein the target signaling comprises at least one of the following:
first indication information, wherein the first indication information is used to indicate the first monitoring behavior; and
second indication information, wherein the second indication information is used to configure at least one of a WUS cycle, a measurement window in the WUS cycle, and a WUS monitoring occasion in the measurement window.

21. The method according to claim 17, wherein the second monitoring behavior meets any one of the following:
in a case that it is detected that at least one piece of target downlink control information DCI associated with a DRX cycle indicates that the terminal does not start a DRX on-duration timer, the second monitoring behavior comprises monitoring the WUS or activating WUS monitoring;
in a case that it is detected that at least one piece of target DCI associated with a DRX cycle indicates that the terminal starts a DRX on-duration timer or the terminal determines that a DRX on-duration timer for a DRX cycle starts, the second monitoring behavior comprises not monitoring the WUS or deactivating WUS monitoring; and
in a case that no target DCI is detected in all DCP monitoring occasions associated with a DRX cycle or it is determined that no DCP is monitored in a DCP monitoring occasion associated with a DRX cycle, the second monitoring behavior comprises monitoring the WUS or activating WUS monitoring.

22. The method according to claim 17, wherein the third monitoring behavior meets at least one of the following:
in a case that the WUS is detected in a target monitoring occasion, the third monitoring behavior comprises any one of the following: determining, based on an indication of the WUS, whether to monitor DCP, not monitoring the DCP, and monitoring the DCP; and
in a case that the WUS is not detected in a target monitoring occasion, the third monitoring behavior is to monitor DCP, wherein
the target monitoring occasion is a WUS monitoring occasion in a DRX cycle before a DCP monitoring occasion.

23. A transmission processing apparatus, comprising:
a first execution module, configured to perform a first operation in a case that a terminal is configured with wake up signal WUS monitoring, wherein the first operation comprises at least one of the following:
determining a first monitoring behavior of a WUS based on configuration information of discontinuous reception DRX in a case that the terminal is not configured with downlink control information with cyclic redundancy check scrambled by a power saving radio network temporary identifier DCP; or
determining at least one of a second monitoring behavior of a WUS based on detection results of DCP and a third monitoring behavior of the DCP based on detection results of the WUS in a case that the terminal is configured with the DCP.

24. A transmission processing apparatus, comprising:
a second execution module, configured to perform a second operation, wherein the second operation comprises any one of the following:
configuring downlink control information with cyclic redundancy check scrambled by a power saving radio network temporary identifier DCP for a terminal, and not configuring configuration information of a wake up signal WUS;
configuring configuration information of a WUS for the terminal, and not configuring DCP;
configuring configuration information of a WUS and configuration information of discontinuous reception DRX for the terminal, and not configuring DCP, wherein the configuration information of the DRX is used to determine a first monitoring behavior of the WUS;
configuring DCP and configuration information of a WUS for the terminal, wherein monitoring of the DCP and monitoring of the WUS meet at least one of the following: detection results of the DCP are used to determine a second monitoring behavior of the WUS, and detection results of the WUS are used to determine a third monitoring behavior of the DCP; and
configuring configuration information of a WUS for the terminal and skipping monitoring configuration information of a physical downlink control channel PDCCH or PDCCH search space set switching, wherein detection results of the WUS are used to determine that the terminal performs a target behavior.

25. A terminal, comprising a processor and a memory, wherein the memory stores a program or instructions capable of running on the processor, and the program or instructions are executed by the processor to implement the steps of the transmission processing method according to any one of claims 1 to 16.

26. A network-side device, comprising a processor and a memory, wherein the memory stores a program or instructions capable of running on the processor, and the program or instructions are executed by the processor to implement the steps of the transmission processing method according to any one of claims 17 to 22.

27. A readable storage medium, wherein the readable storage medium stores a program or instructions, and the program or instructions are executed by the processor to implement the steps of the transmission processing method according to any one of claims 1 to 22.
